# EUROPÄISCHE PATENTSCHRIFT

(11) **EP 0 709 581 B1**
(45) Veröffentlichungstag und Bekanntmachung des Hinweises auf die Patenterteilung: **16.06.1999**
(21) Anmeldenummer: 95117021.6
(22) Anmeldetag: 28.10.1995
(51) Int. Cl.: F16B 7/04

(54) **Verbindungselement für rohrförmige Gegenstände**
Connecting element for tube-shaped articles
Elément de connexion pour articles tubulaires

(30) Priorität: 31.10.1994 DE 9417425 U; 12.01.1995 DE 19500716
(43) Veröffentlichungstag der Anmeldung: 01.05.1996
(73) Patentinhaber: Rosing, Adolf, 93057 Regensburg (DE)
(72) Erfinder: Rosing, Adolf, 93057 Regensburg (DE)
(74) Vertreter: Jaeschke, Rainer, Dipl.-Ing.

(56) Entgegenhaltungen:
- FR-A- 2 251 228
- FR-A- 2 263 409
- US-A- 2 797 968

## Beschreibung

Die Erfindung betrifft eine Verbindungs anordnung, bei der rohrförmigen Gegenständen, beispielsweise mit kreisrundem oder polygonalem Querschnitt, lösbar mit einander verbunden sind, gemäß dem Oberbegriff des Anspruches 1.

Insbesondere betrifft die Erfindung ein Verbindungselement für Rohre mit kreisrundem Querschnitt, so daß im folgenden überwiegend von Rohren die Rede ist, ohne daß damit eine Beschränkung verbunden sein soll. Die Rohre können beispielsweise auch einen regelmäßigen oder unregelmäßigen polygonalen Querschnitt oder einen Querschnitt mit beliebig gekrümmter Oberfläche aufweisen. Dabei ist es nicht erforderlich, daß die jeweiligen Abmessungen der Querschnitte oder die Formen der zu verbindenden Rohre gleich sind. Ferner kann der rohrförmige Gegenstand entlang seiner Längsachse auch krummlinig oder in Form eines Polygons verlaufen.

Für die Herstellung einer Konstruktion aus Streben und Ständern, beispielsweise eines Gerüstes, eines Rahmens für Sichtschutzwände oder dergleichen ist es häufig erforderlich, die Rohre, die die Streben und Ständer bilden, lösbar miteinander zu verbinden. Insbesondere ist dies bei Gerüsten oder beispielsweise bei Konstruktionsspielzeugen notwendig, da derartige Aufbauten lediglich vorübergehend genutzt und anschließend wieder abgebaut werden. Insbesondere bei Aufbauten, die häufig verändert oder häufig ab- und wieder aufgebaut werden sollen, beispielsweise bei Konstruktionsspielzeugen oder Systemen für die Erstellung von Sicht- und Trennwänden im Messebau oder dergleichen, wäre es zweckmäßig, daß die Rohre ohne zusätzliche Hilfsmittel miteinander verbunden werden können.

Aus der DE-A-20 18 648 ist ein Verbindungselement bekannt, bei welchem ein Klemmbereich, dessen Kontur im wesentlichen der Kontur eines Rohres entspricht, freie Enden aufweist, die zusammengedrückt und durch das anschließend aufgesteckte andere Rohr zusammengehalten werden. Das Zusammendrücken der freien Enden erfordert jedoch einige Geschicklichkeit, da die Finger der betätigenden Person sich zwischen den zu verbindenden Rohren befinden. Ferner muß zum Anbringen des Verbindungselementes stets ein ausreichender Freiraum um das eine Rohr herum vorhanden sein, damit das Verbindungselement mit seinen freien Enden über dieses geschoben werden kann.

Durch die WO-A-8 703 346 (EP-A-0 249 601) wird ein Verbindungselement offenbart, bei dem die beweglich miteinander verbundenen Halteelemente mit einem separaten Federelement elastisch in der Loslage gehalten werden. Dabei besteht ein Nachteil darin, daß, da das Federelement nur lose gehalten ist, das Federelement verloren gehen kann, wodurch das Verbindungselement wirkungslos wird. Ferner ist die Herstellung kompliziert, da das Verbindungselement zunächst zusammengesetzt werden muß.

Aus der US-A-2 797 968 ist eine gattungsgemäße Anordnung mit einem Verbindungselement bekannt, das zwei Halteelemente aufweist, die an einem Ende miteinander verbunden sind. Die freien Enden weisen einen Abstand zueinander auf und bilden eine Aufnahme für einen Befestigungsabschnitt einer Bürste oder dergleichen. Die freien Enden werden durch eine Schraubverschluß oder eine Spannhülse zusammengeschoben, so daß der Befestigungsabschnitt fest gehalten wird.

Der Erfindung liegt die Aufgabe zugrunde, ein Verbindungsanordnung der eingangs geschilderten Art zu schaffen, die eine einfache und stabile Montage ohne zusätzliche Hilfsmittel ermöglicht.

Diese Aufgabe wird gemäß der Erfindung, wie in Anspruch 1 definiert, dadurch gelöst, daß das Verbindungselement zwei Halteelemente mit zusammenwirkenden Klemmbereichen und Befestigungsbereichen aufweist, die elastisch in der Schließlage derart gehalten sind, daß der Abstand der Klemmbereiche zueinander kleiner als der äußere Durchmesser des einen rohrförmigen Gegenstandes ist, so daß das Verbindungselement auf das eine Rohr aufgeklippt werden kann und sich dort aufgrund der Vorspannung selbst hält und die endgültige Klemmung durch das Aufschieben des anderen Rohres auf die Aufnahme bewirkt wird. Dadurch kann die Handhabung wesentlich vereinfacht werden, da das Verbindungselement auf das eine Rohr an der gewünschten Stelle aufgespannt werden kann und sich dort zunächst aufgrund der elastischen Verbindung der beiden Halteelemente selbst hält. Die Montage des anderen Rohres kann dann sehr einfach, beispielsweise beidhändig, erfolgen, wobei durch das Aufschieben des anderen Rohres die endgültige Klemmung, beispielsweise durch eine entsprechende Bemessung der Befestigungsbereiche in bezug auf die inneren Abmessungen des anderen Rohres, bewirkt wird.

Für einen Aufbau einer Konstruktion sind daher lediglich die Rohre und die Verbindungselemente in ausreichender Stückzahl erforderlich. Ein zusätzliches Werkzeug muß nicht mehr verwendet werden. Ferner ist es möglich, das Verbindungselement an einer beliebigen Stelle des einen Rohres anzubringen.

Es ist offensichtlich, daß in Abhängigkeit von der Ausbildung des Verbindungselementes die unterschiedlichsten Verbindungen hergestellt werden können. Beispielsweise können die jeweils zusammenwirkenden Befestigungsbereiche winklig zu den jeweiligen Klemmbereichen angeordnet sein, um eine von 90° abweichende Verbindung vorzusehen. Auch ist es möglich, daß die Klemmbereiche gelenkig mit den Befestigungsbereichen verbunden sind, um beispielsweise eine scharnierartige Verbindung zweier Rohre zu ermöglichen.

Grundsätzlich kann das Verbindungselement aus jedem Material, beispielsweise aus Metall, bestehen. Für geringere Belastungen und auch aus Herstellungsgründen kann es zweckmäßig sein, daß wenigstens ein Halteelement aus thermoplastischen Kunststoff besteht. Aufgrund der einstückigen Ausbildung kann das Verbindungselement somit in vorteilhafter Weise aus einem einzigen Spritzgußteil bestehen, wobei die gewünschte Elastizität der Halteelemente und/oder deren Verbindungsbereiche durch die entsprechenden Materialeigenschaften und/oder Wandstärken des Kunststoffes eingestellt werden können. Mit dem Spritzgießverfahren kann das Verbindungselement in großer Stückzahl wirtschaftlich hergestellt werden.

Weiterhin kann vorgesehen werden, daß die Halteelemente aus einem elastischen Material bestehen, so daß die Bewegung zwischen der Loslage und der Schließlage und die Erzeugung der erforderlichen Klemmkraft durch eine elastische Verformung der Halteelemente erfolgen kann.

In der Einbaulage sind die beiden Rohre fest, d. h. reibschlüssig, miteinander verbunden. Zweckmäßig kann es dabei sein, wenn die Halteelemente in der Loslage zwischen sich einen Spalt begrenzen, der in der Schließlage zumindest teilweise verengt ist, so daß die Klemmbereiche mit dem einen rohrförmigen Gegenstand verspannt sind. Dadurch kann zum einen ein einfacher Aufbau bewirkt werden. Zum anderen kann die Festigkeit der Verbindung entsprechend den jeweiligen Abmessungen des Spaltes, des Ausmaßes, um das die Halteelemente zusammengedrückt werden, und der Elastizität der Halteelemente eingestellt werden.

Für die Herstellung einer kreuzförmigen Verbindung der Rohre kann es zweckmäßig sein, daß der Klemmbereich eines Halteelementes im mittleren Bereich des Halteelementes angeordnet ist, wobei jeweils ein Befestigungsbereich auf gegenüberliegenden Seiten des Klemmbereichs des Halteelementes angeordnet ist.

Grundsätzlich ist es möglich, daß mit einem Verbindungselement mehrere Rohre an einem Rohr befestigt werden können. Dazu kann beispielsweise vorgesehen werden, daß an den Klemmbereichen in der Teilungsebene mehrere Befestigungsabschnitte mit unterschiedlichen Winkeln angeordnet sind.

In einer zweckmäßigen Ausgestaltung der Erfindung ist vorgesehen, daß wenigstens ein Halteelement in wenigstens einem Befestigungsbereich auf seiner der inneren Oberfläche des anderen rohrförmigen Gegenstandes zugewandten Seite wenigstens einen in Richtung auf den Klemmbereich zunehmend konisch ausgebildeten Abschnitt aufweist. Dadurch können das Aufstecken des anderen Rohres auf die durch die Befestigungsbereiche gebildete Aufnahme erleichtert und die Spannkraft ggf. erhöht werden.

In einer anderen vorteilhaften Ausgestaltung der Erfindung ist vorgesehen, daß im Übergangsbereich zwischen einem Klemmbereich und einem Befestigungsbereich wenigstens ein Anschlag für den anderen rohrförmigen Gegenstand angeordnet ist. Dies hat den Vorteil, daß das andere Rohr stets in einem definierten Abstand auf das eine Rohr stößt, so daß beispielsweise bei rechtwinkliger Verbindung und gleichlangen Rohren ein gerader Aufbau in einfacher Weise möglich ist.

Weiterhin kann in vorteilhafter Weise vorgesehen werden, daß die dem einen Gegenstand zugekehrte Innenfläche eines Klemmbereichs zumindest teilweise profiliert ist. Dadurch kann eine besonders feste Verbindung der Rohre erfolgen. Ferner kann es auch zweckmäßig sein, daß die dem einen Gegenstand zugekehrte Innenfläche eines Klemmbereichs mit einer elastischen Schicht versehen ist. Dadurch können beispielsweise Geräuschübertragungen vermieden werden und unebene Oberflächen oder unterschiedliche Durchmesser oder Querschnittsformen der zu verbindenden Rohre ausgeglichen werden.

Ferner kann vorgesehen werden daß auf der dem einen Gegenstand zugekehrten Innenfläche eines Klemmbereichs wenigstens ein Vorsprung und/oder eine Aussparung vorgesehen ist, der bzw. die mit wenigstens einer entsprechenden Aussparung und/oder einem entsprechenden Vorsprung auf dem einen rohrförmigen Gegenstand zusammenwirkt. Dies hat den Vorteil, daß somit eine formschlüssige Verbindung hergestellt werden kann, die durch die Verspannung des Verbindungselementes in Position gehalten wird. Dadurch kann der Aufbau auch hohen bis höchsten Belastungen standhalten. Zweckmäßig kann es hierbei sein, daß die Vorsprünge im Querschnitt hakenförmig ausgebildet sind, die in entsprechende Durchbrechungen eingreifen, so daß die Stabilität der Verbindung weiter erhöht werden kann.

Das Verbindungselement stellt somit einen Teil eines Baukastensystems dar, das eine Vielzahl von Konstruktionsmöglichkeiten erlaubt. Es können dazu ferner andere Verbindungselemente vorgesehen werden, die beispielsweise eine axiale Verbindung der Rohre ermöglichen. Diese Verbindungselemente können dann als Hülse ausgebildet sein, deren innerer Durchmesser dem äußeren Durchmesser des Rohres oder deren äußerer Durchmesser dem inneren Durchmesser des Rohres entspricht. Auf gleiche Weise können durch ein entsprechend bemessenes Zwischenrohr teleskopartige Verbindungen hergestellt werden, die einen Längenausgleich der Rohrverbindungen ermöglichen. Ferner können Standfüße vorgesehen werden, die in oder auf ein Ende eines Rohres aufgesteckt werden können. Weiterhin können durch das Verbindungselement gemäß der Erfindung Rohre an die unterschiedlichsten Gegenstände angebracht werden, sofern diese einen entsprechenden Verbindungsabschnitt aufweisen, der der äußeren Form des Rohres entspricht. Beispielsweise können rotationssymmetrische Bauelemente vorgesehen werden, die entlang ihrem Umfang mehrere derartige Verbindungsabschnitte aufweisen.

Die Erfindung wird im folgenden anhand der schematischen Zeichnung näher erläutert. In den Figuren, in denen gleiche Elemente mit jeweils gleichen Bezugszeichen versehen werden, zeigt:
- Fig. 1: eine Verbindungsanordnung mit einem Verbindungselement gemäß der Erfindung in auseinandergezogener perspektivischer Darstellung,
- Fig. 2: ein Verbindungselement in perspektivischer Darstellung,
- Fig. 3: eine Seitenansicht der Verbindungsanordnung in auseinandergezogener Darstellung und gespreiztem Verbindungselement,
- Fig. 4: im Schnitt eine Verbindungsanordnung in Einbauposition,
- Fig. 5: ein Verbindungselement mit schrägem Befestigungsbereich, und
- Fig. 6: ein Verbindungselement in einer weiteren Ausführungsform.

Die in der Zeichnung dargestellte Verbindungsanordnung 10 weist ein Verbindungselement 11 auf, mit dem ein vertikales Rohr 12 mit einem horizontalen Rohr 13 verbunden werden kann. Das Verbindungselement 11 weist zwei miteinander verbundene Halteelemente 14 auf, die jeweils einen Klemmbereich 16 und einen Befestigungsbereich 17 aufweisen.

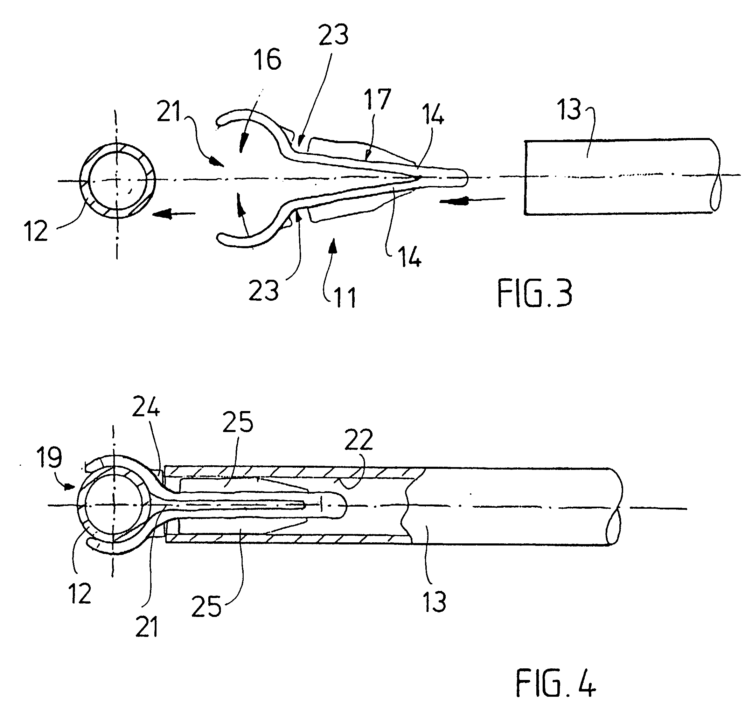

Wie insbesondere aus Fig. 4 ersichtlich, sind die Klemmbereiche 16 so ausgebildet, daß deren innere Oberflächen 18 in der Schließlage einen Freiraum 19 begrenzen, der den Umfang des einen Rohres 12 teilweise umschließt. Die jeweiligen Klemmbereiche 16 der Halteelemente 14 weisen dabei eine in etwa halbzylindrische, im wesentlichen halbschalenförmige Form auf, deren Krümmungsradius dem Außenradius des Rohres 12 zumindest näherungsweise entspricht.

An den Klemmbereich 16 schließt sich der Befestigungsbereich 17 eines Halteelementes 14 an. Im einzelnen ist die Anordnung so getroffen, daß die jeweils zusammenwirkenden Befestigungsbereiche 17 der Halteelemente 14 in der Schließlage eine im wesentlichen zapfenförmige Aufnahme 20 bilden, auf die das andere Rohr 13 aufgesteckt werden kann. Dadurch werden die Halteelemente 14 zusammengedrückt und in der Schließlage zusammengehalten, wobei die erforderliche Klemmkraft durch eine elastische Verformung der Halteelemente 14 erfolgt.

Bei der in der Zeichnung dargestellten Verbindungsanordnung 10 sind sowohl das Rohr 12 als auch das Rohr 13 hohl ausgebildet. Es ist offensichtlich, daß lediglich der Bereich eines Rohres hohl ausgebildet sein muß, der über die Aufnahme 20 gesteckt werden soll. Um ein vielseitiges System zu bilden ist es jedoch zweckmäßig, wenn alle Rohre den gleichen äußeren Durchmesser haben und zumindest an den Enden hohl ausgebildet sind, wobei das innere lichte Maß der Rohre stets auf die Aufnahme paßt.

Die Halteelemente 14 begrenzen einen Spalt 21, der sich beim Aufstecken des Rohres 13 zunehmend verkleinert. Die äußeren Abmessungen der Befestigungsbereiche und die Abmessungen des Spaltes sind so bemessen, daß in der Schließlage die Klemmbereiche 16 mit dem einem Rohr 12 fest verspannt sind. Die Klemmkraft wird bei den in der Zeichnung dargestellten Ausführungsbeispielen durch ein elastisches Zusammendrücken der Halteelemente 14 und ggf. durch ein elastisches Verformen des Übergangsbereichs 23 zwischen dem Klemmbereich 16 und dem Befestigungsbereich 17 bewirkt. Durch die Klemmkraft wird ferner auf die innere Oberfläche 22 des Rohres 13 eine Reibungskraft ausgeübt, durch die das Rohr 13 ebenfalls fest gehalten wird.

Es kann auch vorgesehen werden, daß wenigstens ein Halteelement auf seiner dem anderen Halteelement zugekehrten Seite ein elastisches Element aufweist. Dadurch kann die Klemmkraft, die das aufgesteckte Rohr hält, weiter erhöht werden. Das elastische Element, beispielsweise ein Gummipuffer oder eine Druckfeder, kann dabei zwischen den Halteelementen in der Höhe der Befestigungsbereiche angeordnet und mit wenigstens einem Halteelement verbunden sein.

Bei der in der Zeichnung dargestellten Ausführungsform ist der Spalt 21 zwischen den Halteelementen 14 in der Schließlage nicht vollständig geschlossen. Es ist natürlich auch möglich, daß der Spalt 21 in der Schließlage zumindest näherungsweise geschlossen ist. Die Klemmkraft wird dann insbesondere durch die elastische Verformung des Übergangsbereichs 23 zwischen dem Klemmbereich 16 und dem Befestigungsbereich 17 erzeugt.

Im Übergangsbereich 23 ist ein Anschlag 24 für die Stirnkante des Rohres 13 vorgesehen. Die Halteelemente 14 sind bei der in der Zeichnung dargestellten Ausführungsform in etwa streifenförmig ausgebildet. Dadurch kann ein gutes elastische Verhalten erreicht werden. Im Befestigungsbereich 17 eines Halteelementes 14 sind in Richtung auf die innere Oberfläche 22 des Rohres 13 weisende stegförmige Vorsprünge 25 vorgesehen. Diese Vorsprünge 25 wirken mit der inneren Oberfläche 22 des Rohres 13 während des Aufschiebens des Rohres 13 auf die Aufnahme 20 zusammen, so daß die Halteelemente 14 zusammengedrückt werden und in der Schließlage eine feste reibschlüssige Verbindung der Rohre 12, 13 bewirken. Diese Vorsprünge 25 sind an dem dem Klemmbereich 16 abgekehrten Ende mit einem sich konisch verjüngenden Abschnitt 15 versehen, so daß ein Aufschieben des anderen Rohres 13 leichter möglich ist.

Bei dem dargestellten Ausführungsbeispiel verlaufen die Halteelemente 14 des Verbindungselementes 11 in der Schließlage im wesentlichen parallel zueinander, wobei die Halteelemente 14 an den den Klemmbereichen abgekehrten Enden 26 der Befestigungsbereiche miteinander verbunden sind. Die Klemmbereiche 16 sind dabei geradlinig mit den Befestigungsbereichen 17 verbunden, so daß die Rohre 12, 13 rechtwinklig miteinander verbunden werden können.

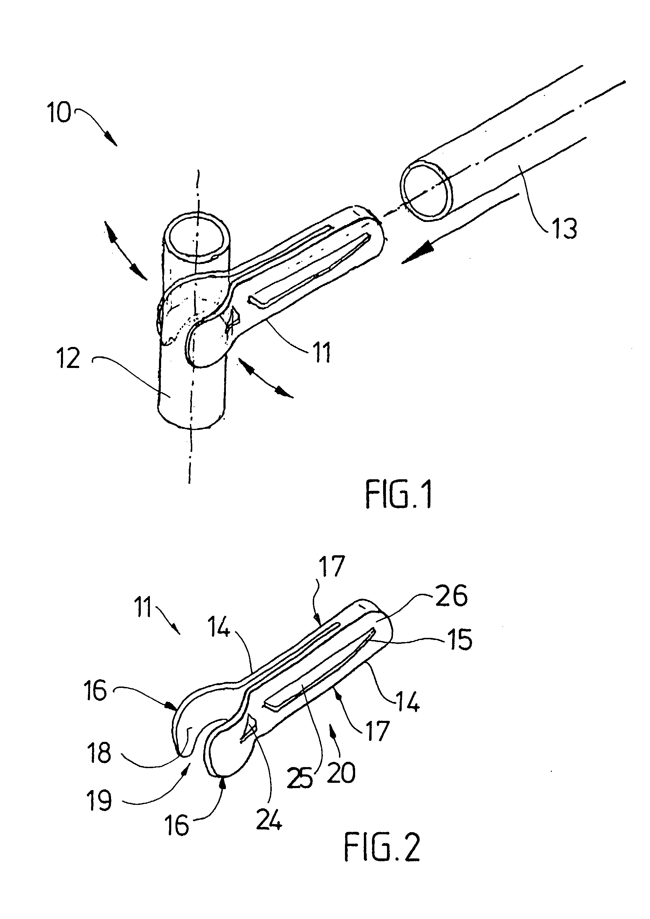

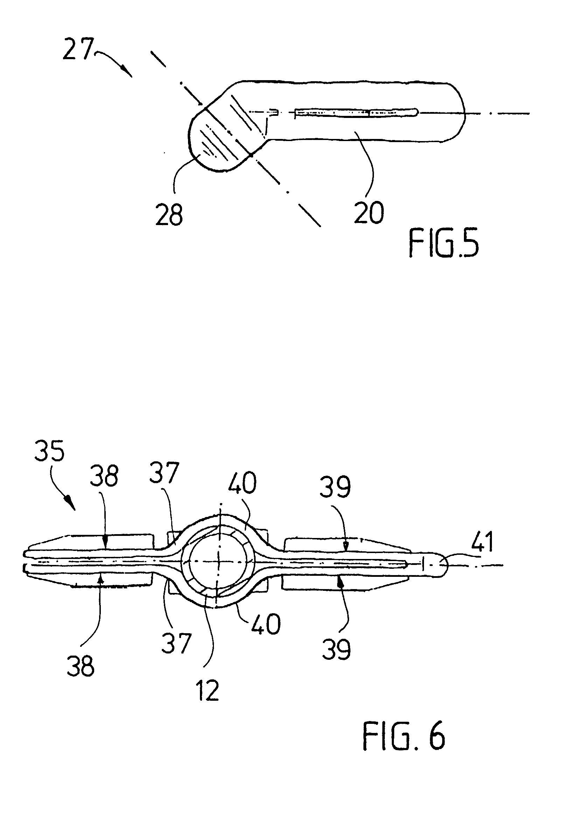

Das in der Fig. 5 dargestellte Verbindungselement 27 entspricht im wesentlichen dem Verbindungselement gemäß Fig. 2. Hier sind jedoch die Klemmbereiche 28 angewinkelt zu der durch die Befestigungsbereiche gebildeten Aufnahme 20 angeordnet, so daß die Rohre in einem anderen Winkel als 90° miteinander verbunden werden können.

Bei dem in Fig. 6 dargestellten Ausführungsbeispiel verlaufen die Halteelemente 37 des Verbindungselementes 35 in der Schließlage ebenfalls im wesentlichen parallel zueinander. Hier weist ein Halteelement 37 zwei Befestigungsbereiche 38, 39 auf, die auf gegenüberliegenden Seiten des Klemmbereichs 40 angeordnet sind, der in etwa der Mitte eines Halteelementes 37 angeordnet ist. Die Halteelemente 37 sind an einem Ende 41 miteinander verbunden. Mit diesem Verbindungselement ist es möglich, eine kreuzförmige Verbindung von Rohren herzustellen. Auch hier kann vorgesehen werden, daß die einzelnen Befestigungsbereiche winklig zum Klemmbereich verlaufen, wodurch die Rohre mit unterschiedlichen Winkeln zueinander verbunden werden können.

Die Verbindungselemente gemäß den Fig. 2 und 6 weisen ansonsten die gleich Wirkungsweise auf. Insbesondere können ebenfalls entsprechend angeordnete und bemessene Vorsprünge 25 und Anschläge 24 vorgesehen werden.

Es kann weiterhin vorgesehen werden, daß zwischen den Halteelementen wenigstens ein Abstandselement, das elastisch und/oder mit einem Halteelement verbunden sein kann, beispielsweise im Endbereich eines Halteelementes angeordnet ist. Dadurch kann die Vorspannung zur Erzeugung der Reibungskraft, mit der das andere Rohr 13 gehalten wird, weiter erhöht werden.

Bei der Erstellung einer Konstruktion kann im einzelnen so vorgegangen werden, daß ein Verbindungselement an der gewünschten Stelle mit den Klemmbereichen auf ein Rohr geklemmt wird. Anschließend wird das andere Rohr auf die durch die Befestigungsbereiche gebildete Aufnahme gesteckt, so daß die Klemmbereiche fest mit dem einen Rohr verspannt sind. Ein Verschieben der Verbindungsstelle ist hier auf einfache Weise dadurch möglich, daß das andere Rohr geringfügig von der Aufnahme gezogen wird, so daß die Klemmkraft nachläßt und das Verbindungselement verschoben werden kann. Eine Demontage erfolgt in umgekehrter Reihenfolge.

Es ist offensichtlich, daß mit diesem Verbindungselement eine Verbindungsanordnung geschaffen werden kann, die zum einen leicht montierbar und leicht lösbar ist und zum anderen ohne zusätzliche Hilfsmittel montiert werden kann. Weiterhin sind an der Verbindungsschelle lediglich die Klemmbereiche ohne vorstehende Spannvorrichtungen vorhanden. Zusammen mit Rohren unterschiedlicher Längen und beispielsweise Zusatzelementen wie Räder, Blendplatten und dergleichen, die auf eine ähnliche Weise angebracht werden können, kann ein vollständiges Baukastensystem bereitgestellt werden. Je nach Größe und Ausführungsform kann das System dann für die Erstellung von Sichtschutzwänden oder dergleichen oder auch als Konstruktionsspielzeug verwendet werden.

Bei den in der Zeichnung dargestellten Ausführungsbeispielen sind sowohl das eine Rohr 12 als auch der durch die Klemmbereiche begrenzte Freiraum 19 kreisrund ausgebildet. Es ist natürlich auch möglich, daß das Rohr und/oder der Freiraum eine andere Querschnittsform, beispielsweise rechteckig, quadratisch oder beliebig polygonal, aufweisen. Zweckmäßig kann es sein, daß zumindest der Klemmbereich eines Halteelementes elastisch ausgebildet ist. Dadurch können beispielsweise unterschiedliche Querschnittsformen des Freiraumes einerseits und des Rohres andererseits besonders gut ausgeglichen werden.

Für eine besonders stabile Verbindung ist es vorteilhaft, wenn die Kontur des durch die Klemmbereiche begrenzten Freiraumes zumindest über einen Teilbereich des Umfanges der äußeren Querschnittsform des einen Rohres entspricht. Für die Fixierung des Verbindungselementes auf dem Rohr können ferner Spannelemente, beispielsweise Schrauben vorgesehen, werden, die durch einen Klemmbereich geschraubt werden. Dabei kann es zweckmäßig sein, wenn das eine Rohr entsprechend ausgebildete Führungsbohrungen oder Kerben aufweist, in die die Spitze der Schraube eingreifen kann.

Zweckmäßig ist es ferner, wenn die äußere Kontur der durch die Befestigungsbereiche gebildete Aufnahme 20 zumindest teilweise in der Schließlage im wesentlichen der inneren Querschnittsform des anderen Rohres entspricht. Dadurch kann ein im wesentlichen spielfreier und fester Aufbau erreicht werden.

Das vorstehend beschriebene und anhand der Zeichnung näher erläuterte Verbindungselement eignet sich insbesondere als Bestandteil eines Konstruktionsspielzeugsystems, da dessen Handhabung sehr einfach ist und auch für Kinder ohne großen Kraftaufwand eingebaut werden kann. Dies ist insbesondere darauf zurückzuführen, daß sich die Klemmbereiche 16 und deren dem Rohr zugewandte Öffnung geradlinig in Aufsteckrichtung an die Befestigungsbereiche 17 anschließen. Dadurch wird erreicht, daß das Verbindungselement in einfacher Weise lediglich mit den vorderen, dem einen Rohr 12 zugewandten, Enden der Klemmbereiche 16 an das Rohr angesetzt zu werden braucht und durch Druck in radialer Richtung des Rohres auf dieses aufgeklemmt wird. Der Druck kann in einfacher Weise durch eine Hand ausgeübt werden, die das den Klemmbereichen abgekehrte Ende 26 des Verbindungselementes festhält. Mit der anderen Hand kann das eine Rohr 12 festgehalten werden.

In diesem aufgeklippten Zustand hält sich das Verbindungselement aufgrund der Vorspannung selbst, mit der die Halteelemente in der Schließlage auf dem Rohr gehalten werden. Im einzelnen wird die Spannung, mit der die Klemmbereiche das eine Rohr umschließen dadurch erzeugt, daß das Verbindungselement im nicht eingebauten Zustand, der Ruhelage, im wesentlichen in der Schließlage gehalten wird, wobei der Abstand der Klemmbereiche zueinander kleiner, insbesondere nur geringfügig kleiner als der Durchmesser des einen Rohres 12 ist. Im aufgeklippten Zustand sind die Halteelemente demnach etwas gespreizt, wodurch die Haltespannung erzeugt wird. Die Klemmbereiche umgeben oder umhüllen somit nicht nur das eine Rohr 12, sondern umschließen es klemmend.

Dann kann es ohne großen Kraftaufwand in axialer Richtung des Rohres verschoben und verdreht werden, um die gewünschte Position einzustellen. Anschließend wird zum Fixieren und zum Bewirken einer endgültigen, festen Klemmung das andere Rohr 13 aufgesteckt. Auch hier ist die Handhabung sehr einfach, da mit der einen Hand das aufzusteckende Rohr 13 bewegt wird, während mit der anderen Hand das senkrecht dazu verlaufende Rohr 12 im Bereich der Verbindungsstelle festgehalten und ein Gegendruck ausgeübt werden kann. Da dieses Aufschieben geradlinig erfolgen kann, werden Kippbewegungen und ein daraus eventuell resultierendes Abrutschen vermieden.

Die endgültige feste Klemmung wird im einzelnen dadurch erzeugt, daß der Befestigungsbereich zumindest im aufgeklippten Zustand zumindest in einem Bereich äußere Abmessungen aufweist, die größer, insbesondere geringfügig größer, als der innere Durchmesser des aufzuschiebenden Rohres 13 ist. Beim Aufschieben des Rohres 13 werden die Befestigungsbereiche 17 zusammengedrückt, wodurch sich die Halteelemente insbesondere im Übergangsbereich zwischen Klemmbereich und Befestigungsbereich elastisch verformen und eine feste Klemmung des einen Rohres 12 bewirken. Gleichzeitig wird ein Druck auf die Innenwandung des aufzuschiebenden Rohres ausgeübt, so daß es reibschlüssig gehalten wird.

Um ein einfaches Aufklemmen, insbesondere nur mit einer Hand, zu ermöglichen ist es zweckmäßig, wenn die vorderen, dem einen Rohr 12 zugekehrten Enden der Klemmbereiche 16 in der Schließlage und somit auch im nicht eingebauten Zustand einen Abstand zueinander aufweisen, so daß durch den Druck in Richtung auf das Rohr die Klemmbereiche tangential am Rohrumfang entlanggleiten und das Aufspreizen bewirken. Sobald die Klemmbereiche über den größten Durchmesser gerutscht sind, schnappt das Verbindungselement automatisch in die Schließlage zurück. Die vorderen Enden der Klemmbereiche können dabei in der Schließ- und Ruhelage einen Abstand aufweisen, der bei einem kreisrunden Querschnitt einem freien, d.h. nicht von den Klemmbereichen erfaßten, Bogenabschnitt mit einem Öffnungswinkel von etwa 45° bis 100° entspricht. Durch diesen Abstand wird ferner erreicht, daß die Halteelemente nicht zu sehr gespreizt werden müssen, um über das eine Rohr 12 gesteckt zu werden. Dadurch können Materialermüdungen und ein Bruch der Verbindungsstelle der Halteelemente vermieden werden. Ferner kann der Kraftaufwand, der zum Aufklippen des Verbindungselementes benötigte wird, verringert werden.

Für ein leichteres Aufstecken des anderen Rohres auf den Befestigungsbereich kann es vorteilhaft sein, wenn die Befestigungsbereiche 17 auf der der Innenwandung des anderen, aufzusteckenden Rohres 13 zugekehrten Seite, also beispielsweise die stegförmigen Vorsprünge 25 der Halteelemente, einen in Richtung auf die Klemmbereiche zunehmenden konischen Verlauf aufweisen, so daß mit zunehmender Einschublänge die aufgebrachte Klemmkraft steigt. Dadurch können je nach Kraftaufwand unterschiedlich feste Verbindungen erzielt werden. Der konische Verlauf kann dann beispielsweise unmittelbar an den Klemmbereichen 16 oder an dem Anschlag 24 enden, oder einen Abstand dazu aufweisen.

Die Vorspannung der Halteelemente in der Schließlage auf dem Rohr kann durch entsprechende Auswahl des Kunststoffes und/oder der Ruhelage der Halteelemente eingestellt werden. Grundsätzlich ist es dabei zweckmäßig, wenn die jeweiligen Halteelemente im wesentlichen gleich ausgebildet sind, um die Herstellung zu vereinfachen und um ein symmetrisches Bauelement herzustellen.

## Patentansprüche

1. Verbindungsanordnung, bei der ein rohrförmiger Gegenstand (12) lösbar mit einem anderen rohrförmigen Gegenstand (13), die jeweils beispielsweise einen kreisrunden oder polygonalen Querschnitt aufweisen, verbunden ist, welche Verbindungsanordnung ein einstückiges Verbindungselement (11, 27, 35) mit wenigstens zwei zusammenwirkenden Halteelementen (14, 37) aufweist, die zwischen einer Loslage und einer Schließlage hin- und herbewegbar sind und die jeweils wenigstens einen Klemmbereich (16, 40) und wenigstens einen Befestigungsbereich (17, 38, 39) aufweisen, welche jeweils miteinander zusammenwirken, wobei die Halteelemente (14, 37) an den den Klemmbereichen (16, 40) abgekehrten Enden (26) der Befestigungsbereiche (17, 39) miteinander verbunden sind, und die jeweils zusammenwirkenden Klemmbereiche (16, 40) der Halteelemente (14, 37) in der Schließlage den Umfang des einen rohrförmigen Gegenstandes (12) zumindest teilweise umschließen und die jeweils zusammenwirkenden Befestigungsbereiche (17, 38, 39) in der Schließlage eine Aufnahme (20) bilden, auf die der andere rohrförmige Gegenstand (13) aufsteckbar ist, so daß die Halteelemente (14, 37) zumindest teilweise zusammengedrückt und die Klemmbereiche (16, 40) mit dem einen rohrförmigen Gegenstand (12) verspannt sind, dadurch gekennzeichnet, daß die Halteelemente (14, 37) elastisch in der Schließlage derart gehalten sind, daß der Abstand der Klemmbereiche (16, 40) zueinander kleiner als der äußere Durchmesser des einen rohrförmigen Gegenstandes (12) ist, so daß das Verbindungselement auf das eine Rohr (12) aufgeklippt werden kann und sich dort aufgrund der Vorspannung selbst hält und die endgültige Klemmung durch das Aufschieben des anderen Rohres (13) auf die Aufnahme (20) bewirkt wird.

2. Verbindungsanordnung nach Anspruch 1, dadurch gekennzeichnet, daß zumindest der Klemmbereich (16, 40) eines Halteelementes (14, 37) elastisch ausgebildet ist.

3. Verbindungsanordnung nach einem der Ansprüche 1 oder 2, dadurch gekennzeichnet, daß die Halteelemente (14, 37) in der Loslage zwischen sich einen Spalt (21) begrenzen, der in der Schließlage zumindest teilweise verengt ist, so daß die Klemmbereiche (16, 40) mit dem einen rohrförmigen Gegenstand (12) verspannt sind.

4. Verbindungsanordnung nach einem der Ansprüche 1 bis 3, dadurch gekennzeichnet, daß der Klemmbereich (40) eines Halteelementes (37) im mittleren Bereich des Halteelementes (37) angeordnet ist, wobei jeweils ein Befestigungsbereich (38, 39) auf gegenüberliegenden Seiten des Klemmbereichs (40) des Halteelementes (37) angeordnet ist.

5. Verbindungsanordnung nach einem der Ansprüche 1 bis 4, dadurch gekennzeichnet, daß wenigstens ein Halteelement (14, 37) im Befestigungsbereich (17, 38, 39) auf seiner der inneren Oberfläche (22) des anderen rohrförmigen Gegenstandes (13) zugewandten Seite wenigstens einen in Richtung auf den Klemmbereich (16, 28, 40) zunehmend konisch ausgebildeten Abschnitt (15) aufweist.

6. Verbindungsanordnung nach einem der Ansprüche 1 bis 5, dadurch gekennzeichnet, daß im Übergangsbereich zwischen Befestigungsbereich (17, 38, 39) und Klemmbereich (16, 40) auf wenigstens einem Halteelement (14, 37) wenigstens ein Anschlag (24) für den anderen rohrförmigen Gegenstand (13) angeordnet ist.

7. Verbindungsanordnung nach einem der Ansprüche 1 bis 6, dadurch gekennzeichnet, daß die Kontur des durch die Klemmbereiche (16, 40) begrenzten Freiraumes (19) zumindest über einen Teilbereich des Umfanges der äußeren Querschnittsform des einen rohrförmigen Gegenstandes (12) entspricht.

8. Verbindungsanordnung nach einem der Ansprüche 1 bis 7, dadurch gekennzeichnet, daß die äußere Kontur der durch die Befestigungsbereiche (17, 38, 39) gebildete Aufnahme (20) in der Schließlage zumindest teilweise im wesentlichen der inneren Querschnittsform des anderen rohrförmigen Gegenstandes (13) entspricht.

9. Verbindungsanordnung nach einem der Ansprüche 1 bis 8, dadurch gekennzeichnet, daß die Haltelemente im wesentlichen gleich ausgebildet sind und das Verbindungselement symmetrisch ist.

10. Verbindungsanordnung nach einem der Ansprüche 1 bis 9, dadurch gekennzeichnet, daß das Verbindungselement aus einem thermoplastischen Kunststoff besteht.

11. Verbindungsanordnung nach einem der Ansprüche 1 bis 10, dadurch gekennzeichnet, daß das Verbindungselement ein Spritzgußteil ist.

12. Verbindungsanordnung nach einem der Ansprüche 1 bis 11, dadurch gekennzeichnet, daß die rohrförmigen Gegenstände (12, 13) jeweils den gleichen Außendurchmesser aufweisen.

## Claims

1. Connecting system in which a tube-shaped article (12) is detachably connected to another tube-shaped article (13), which articles each have, for example, a circular or polygonal cross section, which connecting system has a single-piece connecting element (11, 27, 35) having at least two interacting holding elements (14, 37) which can be moved to and fro between a detachment position and a closure position and which each have at least one clamping region (16, 40) and at least one mounting region (17, 38, 39) which each interact with one another, the holding elements (14, 37) being connected to one another at those ends (26) of the mounting regions (17, 39) remote from the clamping regions (16, 40), and the respectively interacting clamping regions (16, 40) of the holding elements (14, 37) at least partially enclosing in the closure position the circumference of the one tube-shaped article (12) and the respectively interacting mounting regions (17, 38, 39) forming in the closure position a receptacle (20) onto which the other tube-shaped article (13) can be slid so that the holding elements (14, 37) are at least partially pressed together and the clamping regions (16, 40) are fastened to the one tube-shaped article (12), characterized in that the holding elements (14, 37) are held resiliently in the closure position in such a way that the distance of the clamping regions (16, 40) from one another is smaller than the external diameter of the one tube-shaped article (12) so that the connecting element can be clipped onto the one tube (12) and holds itself there due to the pretensioning and the final clamping is effected by pushing the other tube (13) onto the receptacle (20).

2. Connecting system according to Claim 1, characterized in that at least the clamping region (16, 40) of one holding element (14, 37) is of resilient design.

3. Connecting system according to either of Claims 1 or 2, characterized in that, in the detachment position, the holding elements (14, 37) form the boundary of a gap (21) which is at least partially contracted in the closure position so that the clamping regions (16, 40) are fastened to the one tube-shaped article (12).

4. Connecting system according to one of Claims 1 to 3, characterized in that the clamping region (40) of one holding element (37) is disposed in the central region of the holding element (37), an attachment region (38, 39) being disposed on opposite sides of the clamping region (40) of the holding element (37).

5. Connecting system according to one of Claims 1 to 4, characterized in that at least one holding element (14, 37) has, in the mounting region on its side adjacent to the internal surface (22) of the other tube-shaped article (13) at least one portion (15) designed conically so as to increase in the direction of the clamping region (16, 28, 40).

6. Connecting system according to one of Claims 1 to 5, characterized in that, in the transition region between mounting region (17, 38, 39) and clamping region (16, 40), at least one stop (24) for the other tube-shaped article (13) is disposed on at least one holding element (14, 37).

7. Connecting system according to one of Claims 1 to 6, characterized in that the contour of the clearance zone (19) bounded by the clamping regions (16, 40) matches the external cross-sectional shape of the one tube-shaped article (12) at least over a subregion of the circumference.

8. Connecting system according to one of Claims 1 to 7, characterized in that the external contour of the receptacle (20) formed by the mounting regions (17, 38, 39) at least partially essentially matches in the closure position the internal cross-sectional shape of the other tube-shaped article (13).

9. Connecting system according to one of Claims 1 to 8, characterized in that the holding elements are essentially identically designed and the connecting element is symmetrical.

10. Connecting system according to one of Claims 1 to 9, characterized in that the connecting element is composed of a thermoplastic material.

11. Connecting system according to one of Claims 1 to 10, characterized in that the connecting element is an injection moulding.

12. Connecting system according to one of Claims 1 to 11, characterized in that the tube-shaped articles (12, 13) each have the same external diameter.

## Revendications

1. Système de liaison, dans lequel un objet (12) de forme tubulaire est relié de façon amovible à un autre objet (13) de forme tubulaire, objets qui présentent respectivement par exemple une section transversale circulaire ou polygonale dont le système de liaison présentent un élément de liaison d'un seul tenant (11, 27, 35) avec au moins deux éléments de fixation (14, 37) agissant ensemble qui peuvent aller et venir entre une position détachée et une position attachée et présentent respectivement au moins une zone de serrage (16, 40) et au moins une zone de fixation (17, 38, 39), zones qui coopèrent respectivement l'une avec l'autre, les éléments de fixation (14, 37) étant reliés l'un à l'autre aux extrémités (26) des zones de fixation (17, 39) sont situées à l'opposé des zones de serrage (16, 40), et les zones de serrage (16, 40) des éléments de fixation (14, 37, qui coopèrent respectivement, entourent en position attachée le pourtour de l'un des objets (12) de forme tubulaire, au moins en partie, et les zones de fixation (17, 38, 39) qui coopèrent respectivement, formant en position attachée un élément de réception (20) sur lequel on peut insérer l'autre objet de forme tubulaire (13), de telle sorte que les éléments de fixation (14, 37) sont au moins en partie comprimés et que les zones de serrage (16, 40) sont serrées avec l'un des objets (12) de forme tubulaire ,
caractérisé en ce que
les éléments de fixation (14, 37) sont maintenus de façon élastique en position attachée de telle manière que la distance des zones de serrage (16, 40) l'une par rapport à l'autre est plus petite que le diamètre extérieur de l'un des objets de forme tubulaire (12) pour que l'élément de liaison peut être enclipsé sur l'un des tubes (12) et se maintient de lui-même à cet endroit du fait de la précontrainte, et que le serrage final est provoqué par le coulissement de l'autre tube (13) sur l'élément de réception (20).

2. Système de liaison selon la revendication 1,
caractérisé en ce que
la zone de serrage (16, 40) d'un élément de maintien (14, 37) est réalisée de façon élastique.

3. Système de liaison selon l'une des revendications 1 ou 2,
caractérisé en ce que
les éléments de fixation (14, 37) délimitent entre eux, quand ils sont en position détachée, une fente (21) qui se rétrécit au moins en partie en position fermée, de telle sorte que les zones de serrage (16, 40) sont serrées avec l'un des objets (12) de forme tubulaire.

4. Système de liaison selon l'une des revendications 1 à 3,
caractérisé en ce que
la zone de serrage (40) d'un élément de maintien (37) est disposée dans la zone centrale de l'élément de maintien (37), une zone de fixation (38, 39) étant disposée respectivement sur les côtés opposés de la zone de serrage (40) des éléments de maintien (37).

5. Système de liaison selon l'une des revendications 1 à 4,
caractérisé en ce que
au moins un élément de maintien (14, 37) présente dans la zone de fixation (17, 38, 39) de son côté tourné vers la face intérieure (22) de l'autre objet (13) de forme tubulaire, une section (15) de forme conique croissante dans le sens allant vers la zone de serrage (16, 28, 40).

6. Système de liaison selon l'une des revendications 1 à 5,
caractérisé en ce que
dans la zone de transition entre la zone de fixation (17, 38, 39) et la zone de serrage (16, 40) on dispose, sur au moins un élément de maintien (14, 37), au moins une butée (24) pour l'autre objet (13) de forme tubulaire.

7. Système de liaison selon l'une des revendications 1 à 6,
caractérisé en ce que
le contour de l'espace libre (19) qui est délimité par les zones de serrage (16, 40), correspond au moins sur une partie de la zone périphérique, à la forme extérieure en section transversale de l'un des objets (12) de forme tubulaire.

8. Système de liaison selon l'une des revendications 1 à 7,
caractérisé en ce que
le contour extérieur de l'élément de réception (20) qui est formé par les zones de fixation (17, 38, 39) dans la position fermée, correspond sensiblement, au moins en partie, à la forme intérieure en section transversale de l'autre objet (13) de forme tubulaire.

9. Système de liaison selon l'une des revendications 1 à 8,
caractérisé en ce que
- les éléments de maintien sont constitués de façon sensiblement égale et
- l'élément de liaison est symétrique.

10. Système de liaison selon l'une des revendications 1 à 9,
caractérisé en ce que
l'élément de liaison est réalisé en une matière thermoplastique.

11. Système de liaison selon l'une des revendications 1 à 10,
caractérisé en ce que
l'élément de liaison est une pièce coulée par injection.

12. Système de liaison selon l'une des revendications 1 à 11,
caractérisé en ce que
les objets de forme tubulaire (12, 13) présentent respectivement le même diamètre extérieur.
